(19)

Europäisches
Patentamt
European
Patent Office
Office européen
des brevets

(11) **EP 3 617 565 A1**

(12) **EUROPEAN PATENT APPLICATION**
published in accordance with Art. 153(4) EPC

(43) Date of publication:
**04.03.2020 Bulletin 2020/10**

(51) Int Cl.:
***F16J 15/3288*** *(2016.01)*　　***C09K 3/10*** *(2006.01)*
***F16J 15/10*** *(2006.01)*

(21) Application number: **18790597.1**

(22) Date of filing: **17.04.2018**

(86) International application number:
**PCT/JP2018/015818**

(87) International publication number:
**WO 2018/198876 (01.11.2018 Gazette 2018/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.04.2017　JP 2017086271**

(71) Applicants:
• **NOK Corporation
Minato-ku
Tokyo 105-8585 (JP)**
• **Eagle Industry Co., Ltd.
Tokyo 105-8585 (JP)**
• **Kyoto University
Kyoto-shi, Kyoto 606-8501 (JP)**

(72) Inventors:
• **HOSONUMA Norimasa
Fujisawa-shi
Kanagawa 251-0042 (JP)**
• **SUZUKI Nozomu
Fujisawa-shi
Kanagawa 251-0042 (JP)**
• **HOSOE Takeshi
Takahashi-shi
Okayama 716-8511 (JP)**
• **SAKAKIBARA Keita
Kyoto-shi
Kyoto 606-8501 (JP)**
• **TSUJII Yoshinobu
Kyoto-shi
Kyoto 606-8501 (JP)**

(74) Representative: **Weickmann & Weickmann
PartmbB
Postfach 860 820
81635 München (DE)**

(54) **SEAL MEMBER**

(57)　A seal member (1) having a seal surface capable of exhibiting excellent sealing properties is any one seal member (1) selected from a gasket, a mechanical seal, a segment seal, a brush seal, a squeeze packing, a lip packing, and a seal ring, in which the seal member has a seal surface (1a) on which a polymer brush layer (12) is provided.

FIG.1

Printed by Jouve, 75001 PARIS (FR)

## Description

Technical Field

The present invention relates to a seal member.

Background Art

A seal member has a function of preventing a liquid and a gas from leaking from an inner portion of a machine or the like to the outside and a function of preventing dust from intruding into the machine or the like from the outside. Seal members can be roughly divided into dynamic seals such as an oil seal or a mechanical seal, and fixing seals such as a gasket. In both cases, high sealing properties are required for a seal surface.

Currently, as a technique of improving the sealing properties of a seal surface in a seal member, for example, the following method is known. A seal surface is smoothly finished, to provide good surface contact (adhesion) between the seal surface and a surface of a member to be sealed, thereby providing improved sealing properties. For example, Patent Literature 1 discloses a technique of subjecting a portion which can serve as a seal surface of a metallic gasket to precision polishing in order to exhibit stable high adhesion.

Document List

Patent Literature

Patent Literature 1: Japanese Patent Application Laid-Open No. 2004-218737

Summary of Invention

Technical Problem

However, the technique of Patent Literature 1 requires high-precision surface working, has a complicated process, and causes a large burden of work. When a substrate which forms a seal member is made of a hard material and the like, it is substantially difficult to subject the substrate to high-precision surface working, so that sufficient sealing properties may not be obtained on the seal surface. When the surface of a member to be sealed is coarse, even if the seal surface has high surface smoothness, good surface contact between the seal surface and the surface of the member to be sealed is not obtained, which causes leakage. Therefore, the method makes it necessary to subject the surface of the member to be sealed to high-precision surface working, and has a limitation in improvement in the adhesion only by the seal member. Thus, the above method is not sufficient as a technique of improving sealing properties of seal surfaces of various seal members used for various applications.

It is an object of the present invention to provide a seal member having a seal surface capable of exhibiting excellent sealing properties.

Solution to Problem

The present inventors have conducted intensive studies on improvement in sealing properties of a seal surface of a seal member. As a result, the present inventors found that, by forming a polymer brush layer on the seal surface of the seal member, particularly excellent sealing properties of the seal surface are obtained, and completed the present invention based on such a finding.

That is, the present invention primarily includes the following components.

[1] A seal member being any one seal member selected from a gasket, a mechanical seal, a segment seal, a brush seal, a squeeze packing, a lip packing, and a seal ring, wherein
the seal member has a seal surface on which a polymer brush layer is provided.
[2] The seal member according to above [1], further comprising a silica coat layer, wherein
the polymer brush layer is provided on the silica coat layer.
[3] The seal member according to above [1] or [2], wherein the polymer brush layer is swollen by a liquid substance.

Effects of Invention

The present invention can provide a seal member having a seal surface capable of exhibiting excellent sealing properties.

Brief Description of Drawings

[Fig. 1] A schematic cross-sectional view showing one embodiment of a seal member according to the present invention.
[Fig. 2] A schematic diagram of a test apparatus for a torque test.

Description of Embodiments

A seal member according to one embodiment will be described in detail with reference to the accompanying drawings. The present invention is not limited by the following embodiments.

The seal member according to the present embodiment has a polymer brush layer provided on a seal surface. Since the seal member has the seal surface capable of exhibiting excellent sealing properties, the seal member can be suitably used for applications requiring high sealing properties.

The seal member according to the present embodiment is any one seal member selected from a gasket, a mechanical seal, a segment seal, a brush seal, a squeeze packing, a lip packing, and a seal ring. Here, specific examples of the mechanical seal include a mating ring and a seal ring as a constituent member. Specific examples of the squeeze packing include an O ring, a D ring, an X ring, a T ring, a slipper seal, and a gland packing. Specific examples of the lip packing include an oil seal, a U packing, a V packing, an L packing, a J packing, and a wiper ring. Specific examples of the seal ring include a seal apparatus capable of being applied to various hydraulic machines such as a hydraulic automatic transmission for automobile (for example, AT and CVT).

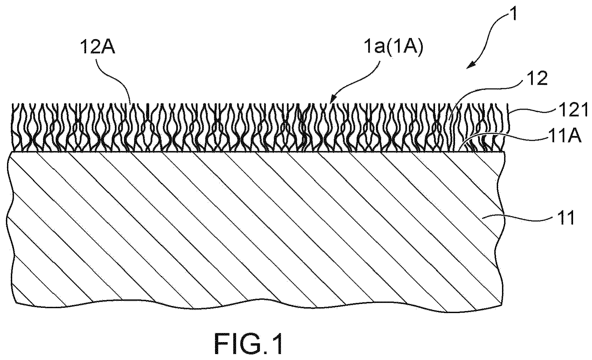

As an example of the seal member according to the present embodiment, a schematic cross-sectional view in which a part of the cross section (near a seal surface 1a) of a seal member 1 is enlarged is shown in Fig. 1. As shown in Fig. 1, the seal member 1 according to the present embodiment has a surface 1A on which a seal surface 1a is provided. Here, the seal surface 1a is at least a part of the surface 1A of the seal member 1, faces the surface of other member (hereinafter, referred to as a surface to be sealed) which is not shown, and means a surface capable of forming a seal state between the seal surface 1a and the surface to be sealed.

The seal member 1 includes a substrate 11 and a polymer brush layer 12 formed on the substrate 11, as shown in Fig. 1.

Here, the formation state of the polymer brush layer 12 is not particularly limited, and may be appropriately selected depending on the shape, material, and surface texture of the substrate 11, and the type of usage of the seal member 1, and the like.

For example, the polymer brush layer 12 may be directly or indirectly formed on a substrate surface 11A. Here, a case where the polymer brush layer 12 is indirectly formed on the substrate surface 11A is, for example, a case where the substrate 11 is subjected to a surface treatment, to form other layer on the substrate surface 11A, and the polymer brush layer 12 is formed on the surface of the other layer. Here, examples of the other layer include a silica coat layer to be described later.

The polymer brush layer 12 may not necessarily cover the whole portion corresponding to the seal surface 1a on the substrate 11 completely. The seal member 1 may has a portion in which the polymer brush layer 12 is not formed in a portion corresponding to the seal surface 1a on the substrate 11 in a range where the effect of the present invention is not hindered, or the polymer brush layers 12 having a given area may be scattered in the portion corresponding to the seal surface 1a on the substrate 11. Furthermore, in the seal member 1, the polymer brush layer 12 may be formed so as to exceed the portion corresponding to the seal surface 1a on the substrate 11, for example, cover the whole substrate 11. That is, if the seal member 1 has the seal surface 1a on which the polymer brush layer 12 is provided, the seal surface 1a exhibits excellent sealing properties. From the viewpoint of obtaining higher sealing properties in the seal surface 1a, the polymer brush layer 12 is preferably formed on the whole surface of the portion corresponding to the seal surface 1a on the substrate 11. In this case, the seal surface 1a serves as a surface 12A formed of the polymer brush layer 12.

The polymer brush layer 12 is a layer in which a plurality of polymer graft chains 121 are fixed on the substrate 11 by a covalent bond, as shown in Fig. 1. The surface 12A of the polymer brush layer 12 is surface in which tips which are not fixed on the substrate 11, of the polymer graft chains 121 thicken in a brush form, and has a surface texture like the surface of a brush.

In the seal member 1 having the seal surface 1a on which the polymer brush layer 12 is provided, the surface texture of the substrate surface 11A corresponding to the seal surface 1a (particularly, surface roughness) is eased by the polymer brush layer 12, whereby the surface texture hardly influences the flatness of the seal surface 1a. This makes it unnecessary to subject the substrate surface 11A corresponding to the seal surface 1a to precise surface working.

The surface 12A of the polymer brush layer 12 in which the polymer graft chains 121 thicken in a brush form has moderate flexibility, and exhibits excellent followability with respect to the surface to be sealed when contacting the surface to be sealed. Therefore, the influence of the surface texture (particularly, surface roughness) of the surface to be sealed is also eased by the polymer brush layer 12 of the seal surface 1a, and good adhesion is obtained between the seal surface and the surface to be sealed.

Thus, according to the seal member 1 having the seal surface 1a on which the polymer brush layer 12 is provided, the seal surface 1a has excellent sealing properties without being influenced by the surface textures of the substrate surface 11A corresponding to the seal surface 1a and the surface to be sealed.

The thickness of the polymer brush layer 12 formed on the seal surface 1a is not particularly limited, but the thickness is more preferably 10 nm or more and 10000 nm or less from the viewpoint of obtaining good sealing properties in the seal surface 1a, and more preferably 100 nm or more and 5000 nm or less from the practical viewpoint. The thickness of the polymer brush layer 12 can be measured by measuring a dry thickness according to ellipsometry. A specific measuring method will be described in the page of Examples to be described later.

The polymer brush layer 12 will be described in more detail in the page of a method for forming the polymer brush layer 12 to be described later.

The substrate 11 can be appropriately selected in a relationship corresponding to the seal member 1. That is, the substrate 11 may be a member corresponding to the seal member 1 (any one selected from a gasket, a mechanical seal, a segment seal, a brush seal, a squeeze packing, a lip packing, and a seal ring). For example, when the seal member 1 is the gasket, the substrate 11 is a member corresponding to the gasket.

Here, the member corresponding to the seal member 1 may be a member having substantially the same shape as that of the seal member 1. There can be used both (i) a member first exhibiting sealing properties provided by forming a polymer brush layer on a surface (seal surface) although the member alone (having no polymer brush layer) does not provide sealing properties, and (ii) a member (seal member) capable of exhibiting sealing properties provided by the member alone (having no polymer brush layer) although the member has poorer sealing properties than those of a seal member 1 of an embodiment having a seal surface on which a polymer brush layer is provided. When the member corresponding to the seal member 1 is the above (ii) member, the substrate 11 and the seal member 1 of the embodiment are seal members belonging to the same classification, but the substrate 11 and the seal member 1 of the embodiment can be respectively distinguished as "a seal member as a substrate" and "a seal member having a seal surface on which a polymer brush layer is provided" (seal member with polymer brush layer).

The material of the substrate 11 can be appropriately selected depending on the application and type of usage of the seal member 1, and a method for forming the polymer brush layer 12 to be described later, and the like, but for example, hard ceramics such as alumina and boron carbide, rubbers, and plastics and the like can be selected.

The surface texture of the substrate 11 is not particularly limited. In particular, the substrate surface 11A corresponding to the seal surface 1a may have moderate flatness and smoothness. It is unnecessary to subject the substrate surface 11A to precise surface working. The seal member 1 of the present invention has the seal surface 1a on which the polymer brush layer 12 is provided. For this reason, the surface roughness of the substrate surface 11A of the seal member 1 is eased by the polymer brush layer 12 even if the substrate surface 11A corresponding to the seal surface 1a is a somewhat coarse surface, whereby the substrate surface 11A hardly influences the sealing properties in the seal surface 1a.

Hereinafter, a method for forming the polymer brush layer 12 will be described with reference to a case where the polymer brush layer 12 is directly formed on the substrate surface 11A shown in Fig. 1 as an example.

The polymer brush layer 12 can be formed by a surface-initiated living radical polymerization method, for example. The surface-initiated living radical polymerization method is a technique of (I) introducing a polymerization initiating group into a substrate surface 11A serving as the starting point of polymer graft chains 121 and (II) performing the surface-initiated living radical polymerization method with the polymerization initiating group as a starting point, to form the polymer graft chains 121. Specifically, as the surface-initiated living radical polymerization method, methods described in Arita, T., Kayama, Y., Ohno, K., Tsujii, Y. and Fukuda, T., "High-pressure atom transfer radical polymerization of methyl methacrylate for well- defined ultrahigh molecular-weight polymers, "Polymer, 49, 2008, 2426-2429. (hereinafter, referred to as Literature P), Japanese Patent Application Publication No. 2009-59659 (hereinafter, referred to as Literature Q), Japanese Patent Application Publication No. 2010-218984 (hereinafter, referred to as Literature R), and Japanese Patent Application Publication No. 2014-169787 (hereinafter, referred to as Literature S) and the like can be applied.

(I) Fixation of polymerization initiating group on substrate surface corresponding to seal surface

Examples of a method for introducing a polymerization initiating group into a substrate surface 11A include, but are not particularly limited to, a method for dissolving or dispersing a polymerization initiator in a solvent to prepare a polymerization initiator solution, and immersing a substrate 11 into the prepared polymerization initiator solution.

The polymerization initiator is not particularly limited, and a compound having a group capable of being bonded onto the substrate 11 and a radical generating group is preferable. For example, polymerization initiators disclosed in Literature P, Literature R, and Literature S and the like can be widely used. Among these, the polymerization initiator is preferably an atom transfer radical polymerization (ATRP)-based polymerization initiator, and more preferably (3-trimethoxysilyl)propyl-2-bromo-2-methylpropionate.

The substrate surface 11A is desirably cleaned as necessary before the polymerization initiating group is introduced. The substrate surface 11A can be cleaned by known methods depending on the material and shape and the like of the substrate 11.

(II) Synthesis of polymer graft chains by surface-initiated living radical polymerization

A method for forming the polymer graft chains on the substrate surface 11A into which the polymerization initiating group has been introduced is not particularly limited. First, various components required for a polymerization reaction such as a predetermined monomer and various low-molecular free initiators (radical initiators) are dissolved or dispersed in a solvent to prepare a polymerization reaction solution. Thereafter, the substrate 11 into which the polymerization initiating group has been preliminarily introduced is immersed into the prepared polymerization reaction solution, followed by pressurizing and heating as necessary, whereby the polymer graft chains 121 containing a predetermined monomer as a polymerization unit can be formed on the substrate surface 11A.

A method for preparing the polymerization reaction solution is not particularly limited, and for example, methods described in Literature P and Literature S and the like can be suitably used. Monomers and low-molecular free initiators and the like described in these Literatures can be widely used. Among these, the polymerization reaction solution is preferably prepared by the method described in Literature P, and the monomer is preferably methyl methacrylate (hereinafter, MMA). Ethyl-2-bromo-2-methylpropionate is preferably used as the low-molecular free initiator.

The reaction condition of the surface-initiated living radical polymerization is not particularly limited, and the surface-initiated living radical polymerization can be performed, for example, under conditions of Literature P and Literature S, and the like. Among these, the polymerization reaction is preferably performed according to the method described in Literature P, and particularly preferably performed under pressurized conditions (for example, about 400 MPa or more and 500 MPa or less) and heated conditions (for example, about 50°C or higher and 60°C or lower). The polymerization reaction is performed during pressurizing, whereby the polymer brush layer 12 which is denser (has a high graft density of the polymer graft chains 121) and has a greater thickness (long average molecule chain length) can be formed.

A surface occupation rate $\sigma^*$ (occupation rate per polymer cross-sectional area) of the polymer graft chains 121 formed on the substrate 11 with respect to the area of the substrate surface 11A is preferably 10% or more, more preferably 15% or more, and still more preferably 20% or more. A graft density $\sigma$ can be calculated from the absolute value of the number-average molecular weight (Mn) of the graft chains, the amount of a polymer grafted (that is, a graft thickness (dry thickness of a polymer brush layer)), and the surface area of the substrate 11. The surface occupation rate $\sigma^*$ can be calculated by determining a polymer cross-sectional area from the repeating unit length of the polymer in a fully stretched state, and the bulk density of the polymer, followed by multiplying the resultant cross-sectional area by the graft density.

More specifically, the surface occupation rate $\sigma^*$ can be determined according to the following formula.

$$\sigma^* = (\text{polymer cross-sectional area}) \times \sigma$$

Here,

$$(\text{polymer cross-sectional area}) = (\text{volume per monomer of graft chain portion}) / (\text{repeating unit length of polymer in fully stretched state})$$

$$(\text{volume per monomer of graft chain portion}) = (\text{molecular weight of monomer}$$

The surface occupation rate $\sigma^*$ means the area rate of a graft point (first monomer) in the substrate surface 11A (100% in closest-packing, grafting cannot be performed so as to exceed 100%).

The average molecule chain length $L_p$ (that is, polymer brush length) of the polymer graft chains 121 forming the polymer brush layer 12 is preferably 10 nm or more and 10000 nm or less, and more preferably within a range of 100 nm or more and 5000 nm or less from the practical viewpoint. When the average molecule chain length $L_p$ of the polymer graft chains 121 is too short, sealing properties tend to deteriorate. The average molecule chain length $L_p$ of the polymer graft chains 121 can be adjusted depending on polymerization conditions and the like, for example.

The average molecule chain length $L_p$ of the polymer graft chains 121 may be determined, for example, by measuring the number-average molecular weight (Mn) and molecular weight distribution (Mw/Mn) of the polymer graft chains 121, and using these measurement results. For example, the polymer graft chains 121 are cut out from the substrate 11 through a treatment with hydrofluoric acid, and the number-average molecular weight (Mn) and molecular weight distribution (Mw/Mn) of the polymer graft chains 121 are measured according to a gel permeation chromatography method using the cutout polymer graft chains 121. Alternatively, it has been known that a free polymer to be produced during polymerization has the same molecular weight as that of the polymer graft chains 121 introduced into the substrate 11. The following method may be employed. The number-average molecular weight (Mn) and molecular weight distribution (Mw/Mn) of the free polymer are measured according to a gel permeation chromatography method, and the resultant values are used as they are. The molecular weight distribution (Mw/Mn) of the polymer graft chains 121 in the polymer brush layer 12 forming the seal surface 1a is preferably close to 1, suitably 1.3 or less, more preferably 1.25 or less, still more preferably 1.20 or less, and particularly preferably 1.15 or less.

The polymer graft chains 121 formed on the substrate 11 are preferably swollen by a liquid substance, to form the polymer brush layer 12. The liquid substance swelling the polymer graft chains 121 is not particularly limited as long as the liquid substance is a compound exhibiting swelling properties for the polymer graft chains 121. An ionic liquid is preferable from the viewpoint of high affinity thereof to the polymer graft chains 121. As the ionic liquid, for example, an ionic liquid and the like described in Literature S can be used. Among these, as the ionic liquid, N,N-diethyl-N-methyl-(2-methoxyethyl)ammonium bis(trifluoromethanesulfonyl)imide (hereinafter, also referred to as "DEME-TFSI") and methoxyethylmethylpyrrolidinium bis(trifluoromethanesulfonyl)imide (hereinafter, "MEMP-TFSI") are preferable.

Examples of a method for causing a liquid substance to swell polymer graft chains 121 formed on a substrate 11 include, but are not particularly limited to, a method for applying a liquid substance to polymer graft chains 121 formed on a substrate 11, followed by leaving, and a method for immersing a substrate 11 on which polymer graft chains 121 have been formed into a liquid substance.

In the seal member 1 according to the above embodiment, a silica coat layer may be provided between the substrate 11 and the polymer brush layer 12. The silica coat layer can be provided by a silica coating treatment according to a sol-gel method using alkoxysilane to the substrate surface 11A, for example. Kinds and conditions for the silica coating treatment according to the sol-gel method using alkoxysilane are not particularly limited as long as the silica coat layer can be provided. Examples of the silica coating treatment according to the sol-gel method using alkoxysilane include a method for dissolving or dispersing alkoxysilane such as tetraalkoxysilane and an alkaline aqueous solution such as 28 mass% ammonia water in a solvent to prepare a reaction solution, and immersing a substrate 11 into the prepared reaction solution. In the silica coating treatment according to the sol-gel method using alkoxysilane, alkoxysilane is converted into silica ($SiO_2$) by hydrolysis and the like. The polymer brush layer 12 can be provided on the silica coat layer as with the case where the polymer brush layer 12 is provided on the substrate 11.

The substrate surface 11A is desirably cleaned as necessary as with the case where the polymer brush layer 12 is provided before providing the silica coat layer. The substrate surface 11A can be cleaned by known methods depending on the material and shape and the like of the substrate 11.

As described above, the seal member has the seal surface 1a on which the polymer brush layer 12 is provided, whereby the seal surface 1a exhibits excellent sealing properties without being influenced by the surface textures of the substrate surface 11A corresponding to the seal surface 1a, and surface to be sealed. The seal member 1 can be suitably used as various seal members 1 requiring high sealing properties in the seal surface 1a, and is particularly suitable as a mechanical seal and a gasket.

In particular, the seal member 1 is suitable as at least one of a mating ring and a seal ring which form the mechanical seal. That is, from the viewpoint of exhibiting excellent sealing properties in the seal surface of the mechanical seal, at least one of the mating ring and the seal ring preferably has a seal surface on which a polymer brush layer is provided. From the viewpoint of obtaining more excellent sealing properties, both the mating ring and the seal ring more preferably have a seal surface on which a polymer brush layer is provided.

Usually, in the mechanical seal, from the viewpoints of abrasion resistance and heat resistance and the like, hard materials such as hard ceramics (such as alumina and silicon carbide) are widely used as a substrate for the mating ring and the seal ring. Usually, a surface (a seal surface of each member, a surface to be sealed when viewed from the contacting other member) where the mating ring and the seal ring contact each other is generally worked at high flatness and high smoothness from the viewpoint of securing sufficient sealing properties (particularly, static sealing properties). However, in order to work the substrate surface at high flatness and high smoothness as these seal surfaces, high-precision surface working is required. However, the above hard material has poor workability. This makes it difficult to subject the substrate surface as the seal surface to surface finishing with high precision, to be disadvantageously apt to cause leakage.

However, even if the substrate surface corresponding to each seal surface is not subjected to precise surface finishing in the mating ring and the seal ring of the mechanical seal of the present embodiment, at least one of the mating ring and the seal ring has the seal surface on which the polymer brush layer is provided, whereby the presence of the polymer brush layer eases the influence of the surface texture on each substrate surface, and each seal surface can have highly secured sealing properties. This can effectively prevent leakage from occurring.

Hereinbefore, embodiments of the present invention have been described. However, the present invention is not limited to the above embodiments, and includes all aspects included in the concept of the present invention and appended claims. Various modifications can be made within the scope of the present invention.

[Examples]

Thereafter, Examples and Comparative Examples will be described in detail to further clarify the advantageous effects of the present invention. However, the present invention is limited to these Examples.

(Example 1)

First, a mating ring (material: alumina) of a mechanical seal was prepared as a substrate. Furthermore, a polymer brush layer was formed on a substrate surface according to the following method, to obtain a seal member 1 which was the mating ring having a seal surface on which the polymer brush layer is provided.

<Fixation of polymerization initiating group on substrate surface corresponding to seal surface>

First, a substrate was ultrasonically cleaned with a mixed solvent of acetone and hexane (the mass ratio of acetone and hexane is 1:1) for 30 minutes, then ultrasonically cleaned with chloroform for 30 minutes, then ultrasonically cleaned with 2-propanol for 30 minutes, and treated with a UV ozone cleaner ("PC440", manufactured by Meiwafosis Co., Ltd.) for 30 minutes.

Then, a mixed solution A of 0.5 parts by weight of (3-trimethoxysilyl)propyl-2-bromo-2-methylpropionate and 22.3 parts by weight of ethanol was prepared in a sample container with a lid. A mixed solution B of 5.7 parts by weight of 28 mass% ammonia water and 25.4 parts by weight of ethanol was prepared in other sample container. The mixed solutions A and B were mixed to prepare a mixed solution C.

Thereafter, the substrate subjected to the above cleaning treatment was immersed into the mixed solution C, left at room temperature for 24 hours, and subjected to a silane coupling reaction. Then, the substrate was taken out from the above reaction solution, and ultrasonically cleaned with ethanol, followed by drying, thereby obtaining the substrate in which a polymerization initiating group was fixed on a substrate surface.

<Synthesis of polymer graft chains by surface initiated atom transfer polymerization>

In a pressure tight container made of Teflon (registered trademark) in a glove box substituted by an inactive gas (argon gas), 26.6 parts by weight of methyl methacrylate (hereinafter, MMA, manufactured by NACALAI TESQUE, INC.) as a monomer, 0.00026 parts by weight of ethyl-2-bromo-2-methylpropionate (manufactured by Tokyo Chemical Industry Co., Ltd.) as a low-molecular free initiator, 0.12 parts by weight of copper bromide (I) (manufactured by Wako Pure Chemical Industries, Ltd.), 0.021 parts by weight of copper bromide (II) (manufactured by Wako Pure Chemical Industries, Ltd.), 0.78 parts by weight of 4,4'-dinonyl-2,2'-bipyridyl (manufactured by Wako Pure Chemical Industries, Ltd.), and 27.5 parts by weight of anisole (manufactured by Wako Pure Chemical Industries, Ltd.) were mixed to prepare a polymerization reaction solution.

Thereafter, the above substrate on which the polymerization initiating group was fixed was immersed into the polymerization reaction solution, and the heat-resistant container was covered with a lid. Surface initiated atom transfer polymerization (SI-ATRP) was performed under conditions of 60°C and 400 MPa for 4 hours. After the completion of the reaction, the substrate was taken out from the above reaction solution, and was ultrasonically cleaned with tetrahydrofuran (hereinafter, THF, manufactured by NACALAI TESQUE, INC.), followed by drying, thereby obtaining a mating ring in which polymer graft chains were introduced into the substrate surface according to the reaction.

<Swelling by ionic liquid>

Onto the seal surface of the mating ring in which the polymer graft chains were introduced into the substrate surface as described above, N,N-diethyl-N-methyl-(2-methoxyethyl)ammonium bis(trifluoromethanesulfonyl)imide (DEME-TFSI, manufactured by Nisshinbo Holdings Inc.) as an ionic liquid was applied, and the seal surface was immersed for 15 hours, to causes the ionic liquid to swell the polymer graft chains, thereby obtaining the mating ring having the seal surface on which a polymer brush layer is formed.

(Example 2)

As a substrate, a seal ring (material: silicon carbide) of a mechanical seal was used. A polymer brush layer was formed on the substrate as with Example 1 to obtain a seal member 2 which had a seal surface on which a polymer brush layer is provided and was the seal ring of the mechanical seal.

(Example 3)

A polymer brush layer was formed in the same manner as in Example 1 except that methoxyethylmethylpyrrolidinium bis(trifluoromethanesulfonyl)imide (MEMP-TFSI) was used as an ionic liquid, to obtain a seal member 3 which had a seal surface on which a polymer brush layer is provided and was a mating ring of a mechanical seal.

(Example 4)

A polymer brush layer was formed in the same manner as in Example 2 except that methoxyethylmethylpyrrolidinium bis(trifluoromethanesulfonyl)imide (MEMP-TFSI) was used as an ionic liquid, to obtain a seal member 4 which had a seal surface on which a polymer brush layer is provided and was a seal ring of a mechanical seal.

(Example 5)

The substrate of the mating ring (material: alumina) used in Example 3 was cleaned ultrasonically with a mixed solvent of acetone and hexane (the mass ratio of acetone and hexane was 1:1) for 30 minutes, cleaned ultrasonically with chloroform for 30 minutes, and cleaned ultrasonically with 2-propanol for 30 minutes. Thereafter, the front and back surfaces of the substrate were treated for 30 minutes respectively with a UV ozone cleaner ("PC440", manufactured by Meiwafosis Co., Ltd.).

Thereafter, a mixed solution D of 0.38 parts by weight of tetraethoxysilane (TEOS) and 12.6 parts by weight of ethanol was prepared in a sample container with a lid. A mixed solution E of 0.96 parts by weight of 28 mass% ammonia water and 24.6 parts by weight of ethanol was prepared in other sample container. The mixed solutions D and E were mixed to prepare a mixed solution F.

Thereafter, the above substrate subjected to the cleaning treatment was immersed into 12.6 parts by weight of ethanol, and mixed with the mixed solution F. The substrate was left at room temperature for 24 hours, and subjected to a silica coating treatment according to a sol-gel method. Then, the substrate was taken out from the above reaction solution, and ultrasonically cleaned with ethanol, followed by drying, thereby obtaining a mating ring in which a silica coat layer was provided on a substrate surface. Thereafter, a polymer brush layer was provided on the silica coat layer in the same manner as in Example 3, to obtain a seal member 5 which included the polymer brush layer and the silica coat layer and was a mating ring of a mechanical seal.

(Example 6)

A polymer brush layer was provided on a silica coat layer in the same manner as in Example 5 except that a seal ring (material: silicon carbide) of a mechanical seal was used in place of the substrate of the mating ring (material: alumina) used in Example 5, and only a substrate surface was subjected to a cleaning treatment of a seal ring, to obtain a seal member 6 which included the polymer brush layer and the silica coat layer and was the seal ring of the mechanical seal.

(Comparative Example 1)

The mating ring used as the substrate in Example 1 was used as a seal member 7 without forming a polymer brush layer on the mating ring.

(Comparative Example 2)

The seal ring used as the substrate in Example 2 was used as a seal member 8 without forming a polymer brush layer on the seal ring.

[Evaluation]

The characteristics of the above seal members (mating rings and seal rings) according to Examples and Comparative Examples were evaluated. The evaluation conditions are as follows. The results are shown in Tables 1 and 2.

[Analysis of polymerization solution]

After the completion of SI-ATRP, a sample was collected in a proper amount from each of the polymerization solutions used in Examples 1 and 2. From $^1$H-NMR measurement and gel permeation chromatography (GPC) of each of the polymerization solutions, a polymerization rate (%) and number-average molecular weight (hereinafter, Mn) of a free polymer cooperatively obtained in the same synthesis system were measured to calculate a weight average molecular weight (hereinafter, Mw) and a molecular weight distribution index (hereinafter, Mw/Mn). The results are shown in Table 1.

In the $^1$H-NMR measurement, a Fourier transform nuclear magnetic resonance apparatus FT-NMR ("JNM-ECA600", manufactured by JEOL RESONANCE) was used, and heavy chloroform (manufactured by Wako Pure Chemical Industries, Ltd.) was used as a heavy solvent. In the gel permeation chromatography measurement, a molecular weight measurement apparatus ("Shodex GPC-101", manufactured by Showa Denko K.K.) (two columns ("Shodex KF-806L", manufactured by Showa Denko K.K.) were connected in series) was used, and tetrahydrofuran was used as an eluting solution. The measurement was performed at 40°C, and a flow rate was set to 0.8 ml/min. From the measurement results obtained by an RI detector attached to the molecular weight measurement apparatus, a number-average molecular weight (Mn) and molecular weight distribution (Mw/Mn) of a free polymer were obtained by using free polymethylmethacrylate (manufactured by VARIAN) as a calibration sample, and a calibration curve in terms of polymethylmethacrylate.

[Analysis of dry thickness]

According to ellipsometry, the dry thickness of the polymer brush layer of PMMA formed on the seal surface of the seal member of each of Examples 1 and 2 was analyzed. From the obtained data, a graft density (hereinafter, $\sigma$(chains/nm$^2$)) and a surface occupation rate (hereinafter, $\sigma$*) were calculated. The results are shown in Table 1.

In the measurement of the dry thickness, a spectral ellipsometer ("M-2000U", manufactured by J.A. Woollam Japan) was used, and deuterium and quartz tungsten halogen (QTH) lamps were used for a light source. The polymer brush layer formed on the alumina substrate cannot be directly analyzed by the above spectral ellipsometer. Therefore, for Example 1, the polymer brush layer was formed in the same reaction system as that of Example 1 on a silicon substrate (10 mm $\times$ 8 mm, thickness: 0.5 mm) (all of the cleaning treatment, the fixation of the polymerization initiating group, SI-ATRP, cleaning, and drying performed in Example 1 were simultaneously performed together with the alumina substrate by using the same solution under the same conditions), to prepare a measurement sample. The measurement sample was subjected to the above analysis. Therefore, the evaluation results of the polymer brush layer of Example 1 described in Table 1 are values analyzed on the surface of the measurement sample.

Since the polymer brush layer formed on a silicon carbide substrate could be directly analyzed by the spectral ellipsometer, the seal surface of the seal member of Example 2 was directly analyzed. Therefore, the evaluation results of the polymer brush layer of Example 2 described in Table 1 are values analyzed in the seal surface of the seal member of Example 2. Even if the polymer brush layer is formed on the silicon substrate in the same reaction system as with the case of Example 1 and the polymer brush layer is measured, the measurement results are values comparable as the values shown in Table 1.

[Table 1]

| Seal member (material of substrate) | Free polymethylmethacrylate | | | | Polymer brush layer | | |
|---|---|---|---|---|---|---|---|
| | Polymerization rate | Mn | Mw | Mw / Mn | Dry thickness | Graft density $\sigma$ | Surface occupation rate $\sigma$* |
| | (%) | $\times 10^6$ | $\times 10^6$ | - | (nm) | (chains/nm$^2$) | (%) |
| Mating ring (alumina) | 14 | 2.7 | 3.2 | 1.20 | 800 | 0.31 | 17 |
| Seal ring (silicon carbide) | 13 | 3.1 | 3.5 | 1.13 | 801 | 0.19 | 10 |

(Test Example 1)

The seal member 1 according to Example 1 and the seal member 2 according to Example 2 were assembled to produce a mechanical seal. DEME-TFSI was used as an ionic liquid with which an apparatus was filled in a torque test. An air leak test and a torque test were performed by using the mechanical seal. Hereinafter, a test apparatus and test method used for the air leak test and the torque test will be briefly described schematically.

[Torque test]

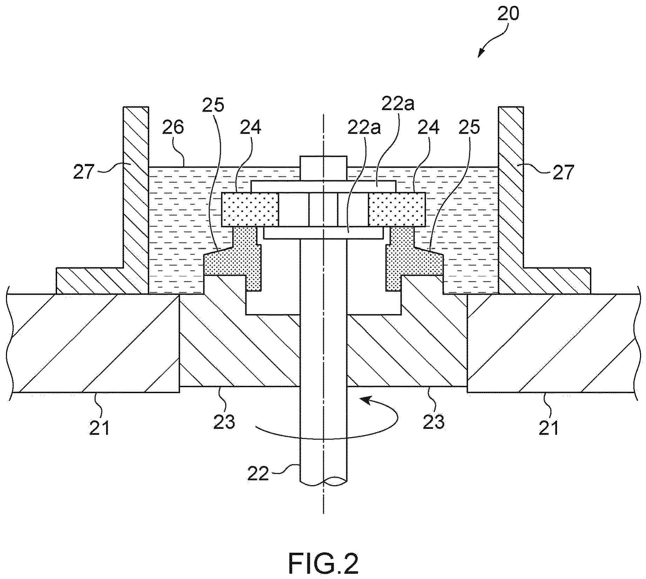

Fig. 2 is a schematic diagram of a test apparatus 20 used in a torque test. As shown in Fig. 2, the test apparatus 20 includes a housing 21 having an opening, a rotation shaft 22 inserted into the opening of the housing 21, and a fixed ring 23 provided between the housing 21 and the rotation shaft 22. In the rotation shaft 22, a pair of circular supporting parts 22a are provided on an end part inserted into the opening of the housing 21. A mating ring 24 (seal member 1) as a rotation side ring is held by the pair of supporting parts 22a of the rotation shaft 22. A seal ring (seal member 2) 25 as a fixed side ring is disposed between the mating ring 24 and the fixed ring 23. A stuffing box 27 in which an ionic liquid 26 as a seal liquid is enclosed is provided in an opening edge part of the housing 21.

In the test apparatus 20, the rotation of the rotation shaft 22 causes the mating ring 24 to be also rotated. At this time, the mating ring 24 slides in a state where the mating ring 24 is pressed against the seal ring 25, whereby tight seal is provided between the mating ring 24 and the seal ring 25. Thereby, airtightness in the housing 21 is maintained.

As shown in Fig. 2, the seal ring 25 and the mating ring 24 were assembled such that a contact load of 25 N was set, to produce a mechanical seal. Thereafter, steady torque in each number of rotations (30 rpm, 50 rpm, 100 rpm) when the number of rotations was changed within a range of 10 rpm or more and 2000 rpm or less was measured without the mechanical seal being pressurized. In the measurement of the torque, a force when the housing was rotated according to sliding torque was measured by a load cell was measured, and the torque was calculated based on the following formula (1).

$$\text{Torque} = \text{distance to position of load cell} \times \text{measured force} \quad (1)$$

[Air leak test]

The seal ring 25 and the mating ring 24 were assembled such that a contact load of 25N was set, in the same manner as in Fig. 2 except that an ionic liquid 26 was not enclosed, to form a mechanical seal. Thereafter, the mechanical seal was pressurized by compressed air from the outer periphery of the mechanical seal in a state where the mating ring 24 was not rotated. A supply valve for the compressed air was closed in a stage where the pressure reached 0.2 MPa, to provide a sealed state. The sealed state was then held for 2 minutes, and a leak speed (ml/h) of static air was calculated from decreased pressure in the meantime. As described above, the mating ring is not rotated in the air leak test, but the mating ring 24 is pressed against the seal ring 25, whereby airtightness is held even in a state where a load is applied.

(Test Example 2)

A mechanical seal was formed in the same manner as in Test Example 1 except that the seal member (seal ring) 8 according to Comparative Example 2 was used in place of the seal member (seal ring) 2 according to Example 2. Thereafter, the mechanical seal was subjected to an air leak test and a torque test in the same manner as in Test Example 1.

(Test Example 3)

A mechanical seal was formed in the same manner as in Test Example 2 except that the seal member (mating ring) 7 according to Comparative Example 1 was used in place of the seal member (mating ring) 1 according to Example 1. Thereafter, the mechanical seal was subjected to an air leak test and a torque test in the same manner as in Test Example 2.

(Test Example 4)

The seal member (mating ring) 3 according to Example 3 was used in place of the seal member (mating ring) 1 according to Example 1, and the seal member (seal ring) 4 according to Example 4 was used in place of the seal member (seal ring) 2 according to Example 2. In a torque test, the apparatus of Fig. 2 was filled with MEMP-TFSI as an ionic liquid. Except for this, a mechanical seal was formed in the same manner as in Test Example 1. The mechanical seal was subjected to an air leak test and a torque test.

(Test Example 5)

The seal member (seal ring) 8 according to Comparative Example 2 was used in place of the seal member (seal ring) 4 according to Example 4. Except for this, a mechanical seal was formed in the same manner as in Test Example 4. The mechanical seal was subjected to an air leak test and a torque test.

(Test Example 6)

The seal member (mating ring) 5 according to Example 5 was used in place of the seal member (mating ring) 1 according to Example 1, and the seal member (seal ring) 6 according to Example 6 was used in place of the seal member (seal ring) 2 according to Example 2. In a torque test, the apparatus of Fig. 2 was filled with MEMP-TFSI as an ionic liquid. Except for this, a mechanical seal was formed in the same manner as in Test Example 1. The mechanical seal was subjected to an air leak test and a torque test.

(Test Example 7)

The seal member (seal ring) 8 according to Comparative Example 2 was used in place of the seal member (seal ring) 6 according to Example 6. Except for this, a mechanical seal was formed in the same manner as in Test Example 6. The mechanical seal was subjected to an air leak test and a torque test.

(Test Example 8)

The seal member (mating ring) 7 according to Comparative Example 1 was used in place of the seal member (mating ring) 5 according to Example 5. Except for this, a mechanical seal was formed in the same manner as in Test Example 7. The mechanical seal was subjected to an air leak test and a torque test.

[Table 2]

| | Fixed side (seal ring) | | | Rotation side (mating ring) | | | Air leak test (ml/ h) | Torque test (N·cm) | | |
| --- | --- | --- | --- | --- | --- | --- | --- | --- | --- | --- |
| | Silica coat layer | Polymer brush layer | Seal member number | Silica coat layer | Polymer brush layer | Seal member number | | 30 rpm | 50 rpm | 100 rpm |
| Test Example 1 | Poor | Good | 2 | Poor | Good | 1 | 5.4 | 0.87 | 1.11 | 1.61 |
| Test Example 2 | Poor | Poor | 8 | Poor | Good | 1 | 7.2 | 1.52 | 1.59 | 2.00 |
| Test Example 3 | Poor | Poor | 8 | Poor | Poor | 7 | 319.6 | 3.42 | 3.29 | 3.38 |
| Test Example 4 | Poor | Good | 4 | Poor | Good | 3 | 3.7 | 0.73 | 0.87 | 1.23 |
| Test Example 5 | Poor | Poor | 8 | Poor | Good | 3 | 5.6 | 1.45 | 1.45 | 1.74 |
| Test Example 6 | Good | Good | 6 | Good | Good | 5 | 7.4 | 0.73 | 1.03 | 1.66 |

(continued)

| | Fixed side (seal ring) | | | Rotation side (mating ring) | | | Air leak test (ml/ h) | Torque test (N·cm) | | |
|---|---|---|---|---|---|---|---|---|---|---|
| | Silica coat layer | Polymer brush layer | Seal member number | Silica coat layer | Polymer brush layer | Seal member number | | 30 rpm | 50 rpm | 100 rpm |
| Test Example 7 | Poor | Poor | 8 | Good | Good | 5 | 5.5 | 0.82 | 1.31 | 1.73 |
| Test Example 8 | Poor | Poor | 8 | Poor | Poor | 7 | 857.7 | 3.66 | 3.33 | 3.23 |

In Test Examples 1, 2, and 4 to 7, at least one of the mating ring and the seal ring which form the mechanical seal is formed of the seal member of Example. That is, at least one of the mating ring and the seal ring includes the polymer brush layer. Meanwhile, in Test Examples 3 and 8, both the mating ring and the seal ring which form the mechanical seal are formed of the seal member of Comparative Example. That is, both the mating ring and the seal ring include no polymer brush layer.

The results of the air leak test and torque test performed in Test Examples 1 to 8 are shown in the above Table 2. As shown in Table 2, the seal member of each of Examples 1 to 4 is at least one of the mating ring and seal ring of the mechanical seal, and has the seal surface on which the polymer brush layer is provided. For this reason, it was confirmed that, when the air leak test is performed, the seal surface exhibits excellent sealing properties, and torque is largely reduced in the torque test (Test Examples 1 and 2, and Test Examples 4 and 5). As can be seen from Test Example 6 and Test Example 7, it was confirmed that the results in any of the air leak test and the torque test in the case where the silica coat layer is included, and the polymer brush layer is provided on the silica coat layer are not inferior to those in the case where the silica coat layer is not provided.

Meanwhile, it has been confirmed that, since the seal members of Test Example 3 and Test Example 8 had the seal surface on which no polymer brush layer is provided, the seal members have sealing properties remarkably inferior to those of Test Examples 1, 2, and 4 to 7, and larger torque.

List of Reference Signs

1       seal member
1a      seal surface
1A      surface of seal member
11      substrate
11A     substrate surface
12      polymer brush layer
12A     surface
121     polymer graft chains
20      test apparatus
21      housing
22      rotation shaft
22a     supporting part
23      fixed ring
24      mating ring (seal member)
25      seal ring (seal member)
26      ionic liquid
27      stuffing box

**Claims**

**1.**   A seal member being any one seal member selected from a gasket, a mechanical seal, a segment seal, a brush seal, a squeeze packing, a lip packing, and a seal ring, wherein
the seal member has a seal surface on which a polymer brush layer is provided.

2. The seal member according to claim 1, further comprising a silica coat layer, wherein
the polymer brush layer is provided on the silica coat layer.

3. The seal member according to claim 1 or 2, wherein the polymer brush layer is swollen by a liquid substance.

12A                                               1a(1A)                  1

12

121

11A

11

## FIG.1

FIG.2

**EP 3 617 565 A1**

## INTERNATIONAL SEARCH REPORT

International application No.

PCT/JP2018/015818

### A. CLASSIFICATION OF SUBJECT MATTER
Int.Cl. F16J15/3288(2016.01)i, C09K3/10(2006.01)i, F16J15/10(2006.01)i

According to International Patent Classification (IPC) or to both national classification and IPC

### B. FIELDS SEARCHED
Minimum documentation searched (classification system followed by classification symbols)
Int.Cl. F16J15/3288, C09K3/10, F16J15/10

Documentation searched other than minimum documentation to the extent that such documents are included in the fields searched
Published examined utility model applications of Japan      1922–1996
Published unexamined utility model applications of Japan    1971–2018
Registered utility model specifications of Japan            1996–2018
Published registered utility model applications of Japan    1994–2018

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2011-521182 A (REXNORD INDUSTRIES, LLC) 21 July 2011, paragraphs [0009]-[0032] & US 2008/0284107 A1, paragraphs [0016]-[0044] & WO 2009/140187 A2 & EP 2291338 A2 | 1<br>2-3 |
| Y | JP 2016-28210 A (EAGLE INDUSTRY CO., LTD.) 25 February 2016, paragraph [0045] & US 2014/0167361 A1, paragraph [0037] & EP 2740974 A1 & CN 103620277 A | 2-3 |
| Y | JP 2014-169787 A (INSTITUTE OF NATIONAL COLLEGES OF TECHNOLOGY JAPAN) 18 September 2014, claims 1, 6-7 (Family: none) | 3 |

☐ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>09 July 2018 (09.07.2018) | Date of mailing of the international search report<br>17 July 2018 (17.07.2018) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

## REFERENCES CITED IN THE DESCRIPTION

**Patent documents cited in the description**

- JP 2004218737 A
- JP 2009059659 A
- JP 2010218984 A
- JP 2014169787 A

**Non-patent literature cited in the description**

- **ARITA, T. ; KAYAMA, Y. ; OHNO, K. ; TSUJII, Y. ; FUKUDA, T.** High-pressure atom transfer radical polymerization of methyl methacrylate for well-defined ultrahigh molecular-weight polymers. *Polymer,* 2008, vol. 49, 2426-2429